# DEMANDE DE BREVET EUROPEEN

(11) **EP 4 776 520 A1**
(43) Date de publication de la demande: **15.07.2026**
(21) Numéro de dépôt: 26151370.9
(22) Date de dépôt: 12.01.2026
(51) Int. Cl.: H04B 5/77

(54) **TRAME D'INTERROGATION**

(30) Priorité: 13.01.2025 EP 25315013; 30.06.2025 FR 2507342
(71) Demandeur: STMicroelectronics International N.V., 1228 Plan-les-Ouates, Geneva (CH)
(72) Inventeur: GRIMAUD, Jean-Marc, 06410 BIOT (FR); MOHAMMED BRAHIM, Arach, 06600 ANTIBES (FR)
(74) Mandataire: Cabinet Beaumont

(57) **Abrégé**

La présente description concerne un procédé et un dispositif de communication en champ proche utilisant une trame d'interrogation (401) comprenant au moins une donnée paramétrable (402).

## Description

### Domaine technique

La présente description concerne de façon générale les systèmes et dispositifs électroniques, et les moyens de communications entre ces systèmes et dispositifs électroniques. La présente description se rapporte plus particulièrement à des communications utilisant la technologie NFC (Near Field Communication), et à des trames d'interrogations utilisées pendant la mise en oeuvre de telles communications.

### Technique antérieure

La plupart des communications sans fil, comme les communications en champ proche ou communications NFC (Near Field Communication), utilisent pour s'amorcer des trames d'interrogations. Une trame d'interrogation est une trame de données envoyée par un dispositif adapté à mettre en oeuvre une communication sans fil pour "appeler" un autre dispositif et entamer une communication sans fil.

Il serait souhaitable de pouvoir améliorer, au moins en partie, certains aspects des communications sans fil et des dispositifs de communication sans fil.

### Résumé de l'invention

Il existe un besoin pour des procédés de communications sans fil, entre deux dispositifs électroniques, plus performants.

Il existe un besoin pour des procédés de communications NFC, entre deux dispositifs électroniques, plus performants.

Il existe un besoin pour des procédés de communications NFC et des dispositifs de communication NFC, utilisant des trames d'interrogation paramétrables.

Un mode de réalisation pallie tout ou partie des inconvénients des procédés de communication NFC connus.

Un mode de réalisation pallie tout ou partie des inconvénients des dispositifs de communication NFC connus.

Un mode de réalisation prévoit un procédé de communications NFC et un dispositif de communication NFC, utilisant des trames d'interrogation paramétrables.

Un mode de réalisation prévoit un procédé de communications NFC et un dispositif de communication NFC, utilisant des trames d'interrogation ne se conformant pas aux règles d'établissement d'une trame d'interrogation standard.

Un mode de réalisation prévoit un procédé de communication en champ proche utilisant une trame d'interrogation comprenant au moins une donnée paramétrable.

Un mode de réalisation prévoit un dispositif de communication en champ proche adapté à utiliser une trame d'interrogation comprenant au moins une donnée paramétrable.

Selon un mode de réalisation, ladite au moins une première donnée paramétrable comprend une requête.

Selon un mode de réalisation, ladite requête comprend un temps de réponse maximale.

Selon un mode de réalisation, ladite au moins une donnée paramétrable a une taille minimale de 8 bits.

Selon un mode de réalisation, ladite au moins une donnée paramétrable a une taille maximale de 128 bits.

Selon un mode de réalisation, ladite au moins une donnée paramétrable est disposée au début de ladite trame d'interrogation.

Selon un mode de réalisation, ladite au moins une donnée paramétrable est disposée entre des deuxièmes données standardisées différente de ladite donnée paramétrable.

Selon un mode de réalisation, lesdites deuxièmes données standardisées comprennent une succession d'une ou de plusieurs des données suivantes, dans l'ordre énoncé :
- une donnée de requête de type A ;
- une donnée de requête de type B ;
- une donnée de requête de type F ; et
- une donnée de requête de type V.

Selon un mode de réalisation, l'utilisation de ladite trame d'interrogation est déclenchée par une intervention logicielle liée à une opération logicielle ou liée à une opération mécanique.

Un mode de réalisation prévoit un dispositif adapté à générer ladite trame d'interrogation.

Un mode de réalisation prévoit un dispositif adapté à recevoir ladite trame d'interrogation.

Un mode de réalisation prévoit un système comprenant un dispositif tel que décrit.

Un mode de réalisation prévoit un programme d'ordinateur comprenant des instructions de code de programme pour l'exécution des étapes du procédé décrit lorsque ledit programme est exécuté sur un ordinateur constituant l'un des dispositifs décrits.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un exemple d'un dispositif électronique ;
la figure 2 représente, très schématiquement et sous forme de bloc, un exemple de réalisation d'une communication NFC ;
la figure 3 représente un exemple d'une trame d'interrogation d'une communication NFC ;
la figure 4 représente un mode de réalisation d'une trame d'interrogation d'une communication NFC ; et
la figure 5 représente un mode de mise en oeuvre d'une communication NFC utilisant le mode de réalisation de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire.

Sauf précision contraire, les expressions « environ », « approximativement », « sensiblement », et « de l'ordre de » signifient à 10 % ou à 10° près, de préférence à 5 % ou à 5° près.

Les modes de réalisation décrits ci-après concernent la mise en oeuvre d'une communication en champ proche, ou communication NFC (Near Field Communication), et les trames d'interrogations, aussi appelées trame de polling, utilisées pour entamer une telle communication en champ proche. Les trames d'interrogations sont des trames de données définies par un standard. Les modes de réalisation décrits ci-après se rapportent à l'utilisation de trames d'interrogations paramétrables qui incluent des données qui ne sont pas prévues par le standard.

L'utilisation de telles trames d'interrogations paramétrables permettent l'utilisation de dispositif de communication NFC qui ne sont pas capables de répondre aux trames d'interrogations définies par un standard. Cela peut permettre, par exemple, de diversifier les types de dispositifs de communication NFC pouvant communiquer entre eux, sans pour autant prendre la place de dispositifs de communication NFC utilisant des trames d'interrogations standard.

De plus, les modes de réalisation décrits ci-dessus sont particulièrement adaptés pour être utilisés dans tout type de marchés industriels où une communication NFC est nécessaire. Plus particulièrement, une telle communication NFC peut être destiné à :
- l'industrie automobile, par exemple dans le domaine de l'électrification automobile ou dans le domaine des systèmes avancés d'aide à la conduite (Advanced Driver Assistance Systems - ADAS) ;
- le secteur industriel, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

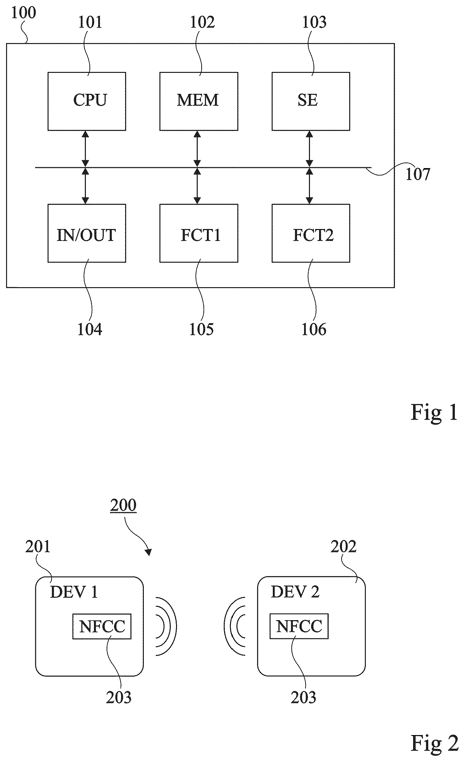

La figure 1 est un schéma bloc représentant, très schématiquement, une architecture d'un exemple d'un dispositif électronique 100 adapté à mettre en oeuvre une communication NFC.

Selon un exemple, le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 peut être adapté à mettre en oeuvre un procédé de communication NFC.

Selon un exemple, le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 peut être adaptée à stocker différents types de données.

Selon un exemple, le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 peut être adapté à mettre en oeuvre un procédé de communication NFC.

Selon un exemple, le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage. Selon un mode de réalisation, un des circuits d'interface 104 peut être adapté à mettre en oeuvre un procédé de communication NFC.

Selon un exemple, le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesure, des circuits de conversion de données, etc. Selon un mode de réalisation, les circuits 105 et 106 peuvent comprendre un circuit spécifique adapté à mettre en oeuvre un procédé de communication NFC.

Selon un exemple, le dispositif électronique 100 comprend, en outre, un ou plusieurs bus de données 107 adaptés à transférer des données entre ses différents composants.

Selon un exemple particulier, le dispositif électronique 100 est adapté à mettre en oeuvre des programmes informatiques, et, en particulier, un programme informatique permettant de mettre en oeuvre un procédé de communication sans fil, comme une communication NFC par exemple un programme informatique permettant de mettre en oeuvre un procédé de communication NFC côté terminal et/ou côté carte.

Plus précisément, le dispositif électronique 100 est adapté à mettre en oeuvre au moins un produit programme d'ordinateur comprenant des instructions de code de programme enregistré sur un support utilisable dans un ordinateur, comprenant des moyens de programmation lisibles par ordinateur pour mettre en oeuvre le procédé de communication NFC en tant que dispositif terminal et/ou en tant que dispositif carte lorsque ledit programme fonctionne sur un ordinateur.

La figure 2 illustre, très schématiquement et sous forme de blocs, une communication sans fil 200 et sans contact entre un dispositif 201 (DEV1) électronique servant de terminal qui peut être mobile, ou terminal mobile 201, et un dispositif 202 (DEV2) électronique servant de module distant, ou module distant 202, aussi appelé module carte 202.

Selon un mode de réalisation, la communication 200 sans fil et sans contact concernée ici utilise, pour sa mise en oeuvre, une technologie de communication en champ proche, appelée ci-après communication NFC. Les technologies de communication en champ proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (module distant, transpondeur ou carte). Selon un exemple, une telle communication sans fil peut permettre de mettre en oeuvre une transaction sans fil, ou transaction NFC. On appelle transaction ici une communication particulière dont la finalité est une opération commerciale, monétaire, de fidélité et/ou d'autorisation dans lequel un dispositif, le terminal 201, est le terminal de "paiement" ou de "contrôle" qui met en oeuvre la transaction et l'autre dispositif, le module distant 202, est celui qui accepte ou non la transaction.

On suppose ici le cas de deux dispositifs électroniques, par exemple le terminal 201 et le module distant 202, mais tout ce qui va être décrit s'applique plus généralement à tout système dans lequel un transpondeur capte un champ électromagnétique rayonné par un lecteur, borne ou terminal. Le terminal 201 et le module distant 202 sont, par exemple, des dispositifs électroniques du type du dispositif 100 décrit en relation avec la figure 1. Dans ce type de communication, les dispositifs électroniques 201 et 202 sont positionnés à portée l'un de l'autre, c'est-à-dire à une distance généralement inférieure à 10 cm. Selon un autre exemple, les dispositifs 201 et 202 sont en contact mécanique l'un avec l'autre.

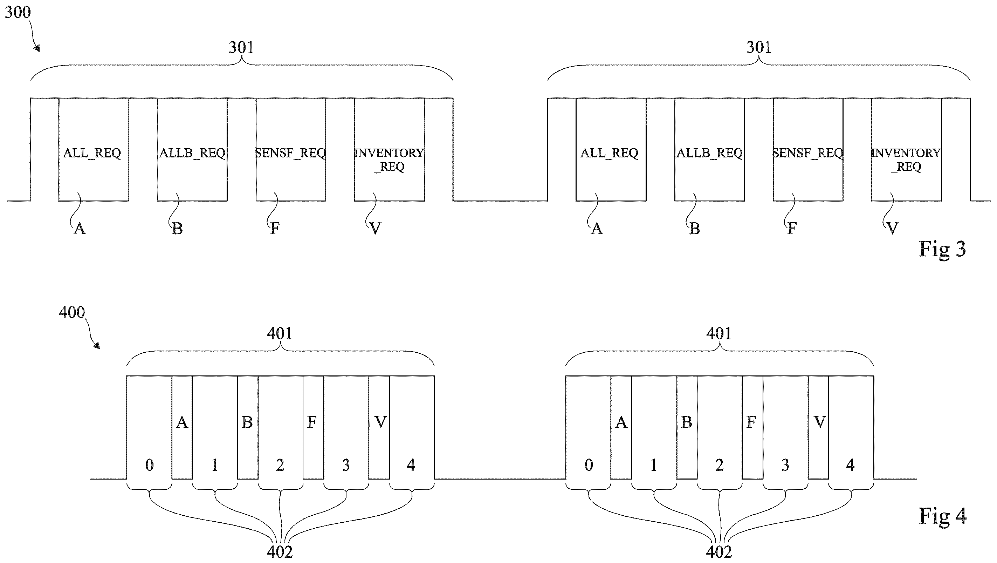

Selon les applications, pour une communication NFC, un des dispositifs, le terminal 201, fonctionne en mode dit lecteur tandis que l'autre, le module distant 202, fonctionne en mode dit carte, ou les deux dispositifs communiquent en mode poste à poste (peer to peer - P2P). Chaque dispositif comporte divers circuits électroniques 203 (NFCC) adapté à émettre, recevoir et/ou moduler un signal radiofréquence (RF) transmis à l'aide d'une antenne d'un circuit oscillant/résonnant. Le champ radiofréquence généré par l'un des dispositifs, par exemple le terminal 201, est capté par l'autre dispositif, par exemple le module distant 202, qui se trouve à portée et qui comporte également une antenne. Lorsque le terminal 201 émet un champ électromagnétique pour initier une communication avec le module distant 202, ce champ est capté par le module distant 202 dès qu'il se trouve à portée. Ce champ est détecté par les circuits 203 du module distant 202 qui, s'ils sont en veille, sont réactivés. Dans certains cas, en fonction du type du dispositif, le dispositif distant capte l'énergie du champ (en même temps que les données de la communication) et l'utilise pour s'alimenter. Dans ce cas, un démarrage du dispositif distant (202) est nécessaire. Cela se traduit par une variation de la charge constituée par les circuits 203 du module distant 202 sur le circuit résonant de génération du champ du terminal 201. En pratique, la variation correspondante de phase ou d'amplitude du champ émis est détectée par le terminal 201 qui entame alors un protocole de communication NFC avec le module distant 202. Côté terminal 201, on détecte en pratique si l'amplitude de la tension aux bornes du circuit résonnant descend en dessous d'un seuil ou si la tension aux bornes du circuit résonnant présente un déphasage supérieur à un seuil. Une fois que le terminal 201 a détecté la présence du module distant 202 dans son champ, il entame une procédure d'établissement de communication, mettant en oeuvre des émissions de requêtes par le terminal 201 et de réponses par le module distant 202. Les émissions de requêtes et de réponses sont décrites plus en détail en relation avec la figure 4.

Selon un exemple, le terminal 201 est un dispositif électronique qui peut être, par exemple, fixe ou mobile. C'est le terminal 201 qui est en charge d'amorcer la communication.

Le module distant 202 est un dispositif généralement mobile. Selon un exemple, le module distant 202 est une carte à microcircuits (ou carte à puce), par exemple une carte bancaire ou une carte de transport. Selon un autre exemple, le module distant 202 pourrait être un téléphone mobile adapté à mettre en oeuvre une application lui permettant de reproduire, simuler, ou émuler, le comportement d'une ou plusieurs cartes à microcircuits. Le module distant 202 comprend différents circuits électroniques adaptés à mettre en oeuvre diverses requêtes envoyées par le terminal 201, comme par exemple, des circuits d'authentification, des circuits de cryptographie, etc.

Dans les systèmes récents, un même dispositif NFC peut opérer en mode carte ou en mode lecteur (par exemple dans le cas d'une communication en champ proche entre deux téléphones mobiles), et peut choisir, selon le cas, s'il fonctionne en mode carte ou en mode lecteur. Selon un exemple, le module 201 pourrait être utilisé comme lecteur ou terminal pour mettre en oeuvre une transaction de paiement, et, dans un autre cas, être utilisé comme carte, par exemple, pour valider un titre de transport.

Selon un mode de réalisation particulier, la communication sans fil 200 est une communication NFC suivant le protocole de communication fixé par la norme ISO 14443. Les éléments clés de ce protocole de communication en lien avec les modes de réalisation décrits ici sont décrits en relation avec la figure 3.

La figure 3 représente, schématiquement, des données d'initialisation 300 d'une communication NFC.

Les données d'initialisation 300 sont adaptées à être utilisées pour démarrer une communication NFC du type de la communication 200 décrite en relation avec la figure 2. Plus particulièrement, les données d'initialisation 300 sont générées par un dispositif électronique du type du dispositif 100 décrit en relation avec la figure 1 et sont utilisées par ce dispositif pour "appeler" un autre dispositif électronique et démarrer une communication NFC avec cet autre dispositif.

Selon un exemple, les données d'initialisation 300 comprennent une ou plusieurs, généralement plusieurs, trames d'interrogations 301. Une trame d'interrogation est un ensemble de données comprenant des informations sur le type de dispositif et/ou de communication NFC que le dispositif la générant souhaite mettre en oeuvre. L'envoi d'une trame d'interrogation 301 signifie la mise en marche des circuits mettant en oeuvre la communication NFC, et en particulier la génération d'un champ électromagnétique, et l'envoi d'une requête à destination d'un dispositif électronique pour la mise en oeuvre d'une communication NFC.

De façon plus précise, une trame d'interrogation standard est une trame de données pouvant comprendre une succession de quatre données standardisées dénommées communément "A", "B", "F", et "V", séparées les unes des autres par des durées muettes, c'est-à-dire des durées pendant lesquelles aucune donnée n'est transmise. Ces quatre données "A", "B", "F", et "V" sont toujours citées dans cet ordre, mais ces quatre données ne sont pas nécessairement toutes toujours présentes. Selon un exemple, la donnée "A" est une donnée de requête de type "A". Selon un exemple, la donnée "B" est une donnée de requête de type "B". Selon un exemple, la donnée "F" est une donnée de requête de type "F". Selon un exemple, la donnée "V" est une donnée de requête de type "V". Ces quatre données sont toutes définies de manière précise par les standards des communication NFC, comme la norme ISO 14443.

En figure 3, chaque trame d'interrogation 301 comprend :
- la donnée standardisée A (ALL_REQ) ;
- la donnée standardisée B (ALLB_REQ) suivant directement une durée muette et la donnée standardisée A ;
- la donnée standardisée F (SENSF_REQ) suivant directement une durée muette et la donnée standardisée B ; et
- la donnée standardisée V (INVENTORY_REQ) suivant directement une durée muette et la donnée standardisée F.

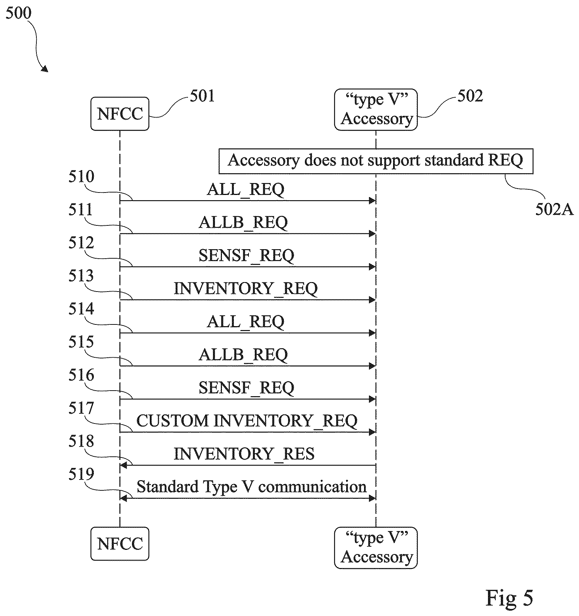

Comme dit précédemment, les données A, B, F et V sont définies par un standard, et tout dispositif électronique ne suivant pas ce standard ne peut entrer en communication avec un dispositif électronique en utilisant des trames d'interrogation du type des trames 301. Pour résoudre ce problème, les modes de réalisation décrits en relation avec les figures 4 et 5 se proposent d'utilisant des trames d'interrogations paramétrables.

La figure 4 représente, schématiquement, un mode de réalisation de données d'initialisation 400 d'une communication NFC.

Selon un mode de réalisation, les données d'initialisation 400 comprennent une ou plusieurs, généralement plusieurs, trames d'interrogations 401. A la différence des trames d'interrogation 301 décrites en relation avec la figure 1, les trames d'interrogation 401 sont des trames d'interrogations paramétrables. Selon un mode de réalisation, les trames d'interrogations paramétrables sont des trames d'interrogations comprenant, en plus d'une ou plusieurs données standardisées, des données paramétrables qui sont transmises au moment des durées muettes. Ces données paramétrables sont, par exemple, définies par le fabricant et ne répondent pas au standard des communications NFC, c'est-à-dire la norme ISO 14443. Ces données paramétrables sont, par exemple, des données identiques aux données de requêtes standardisées ou bien des données de requêtes différentes de ces données de requêtes standardisées. Selon un mode de réalisation, ces données paramétrées sont des données adaptées à faire réagir des dispositifs de communication NFC particuliers.

Ainsi, en figure 4, chaque trame d'interrogation 401 peut comprendre :
- une donnée standardisée A ;
- une donnée standardisée B ;
- une donnée standardisée F ;
- une donnée standardisée V ; et
- une ou plusieurs données paramétrables 402 transmises pendant des durées muettes présentes entre les données standardisée A, B, F et V, chaque durée muette correspondant à un emplacement paramétrable.

Selon un mode de réalisation, cinq durées muettes 0 à 4 pouvant accueillir des données paramétrables peuvent être définies au sein d'une trame d'interrogation 401. Plus particulièrement :
- une première durée muette 0 est présente avant l'envoi de la donnée standardisée A ;
- une deuxième durée muette 1 est présente après l'envoi de la donnée standardisée A et avant l'envoi de la donnée standardisée B ;
- une deuxième durée muette 2 est présente après l'envoi de la donnée standardisée B et avant l'envoi de la donnée standardisée F ;
- une deuxième durée muette 3 est présente après l'envoi de la donnée standardisée F et avant l'envoi de la donnée standardisée V ; et
- une deuxième durée muette 4 est présente après l'envoi de la donnée standardisée V.

Comme dit précédemment, les quatre données A, B, F et V sont toujours citées dans le même ordre, mais ces quatre données ne sont pas nécessairement toujours toutes présentes. Ainsi, une trame d'interrogation 401 peut contenir plusieurs emplacements paramétrables contigus. De plus, une trame d'interrogation 401 peut ne pas présenter toutes les durées muettes 0 à 4 présentées ici.

Selon un mode de réalisation, chaque durée muette peut comprendre une ou plusieurs données paramétrables 402. Ces données paramétrables 402 permettent l'envoi d'une requête à destination d'un dispositif électronique particulier ne répondant pas aux requêtes standardisées des données A, B, F et V pour la mise en oeuvre d'une communication NFC. Selon un mode de réalisation préféré, la ou les données paramétrables 402 comprennent une requête appelant une réponse de la part d'un dispositif externe. De plus, la ou les données paramétrables 402 peuvent comprendre, en outre, une donnée indiquant un temps de réponse maximale, c'est-à-dire une information indiquant une durée maximale à ne dépasser pour qu'une réponse d'un dispositif électronique externe permette le démarrage d'une communication NFC soit démarrée.

Selon un exemple, chaque donnée paramétrable 402 peut comprendre une taille minimale de 8 bits, ou un Byte, c'est-à-dire un octet, et une taille maximale de 128 bits, ou 16 Bytes, c'est-à-dire 16 octets.

Selon un mode de réalisation, un dispositif de communication NFC est, par exemple, adapté à utiliser une telle trame d'interrogation paramétrable 401 suite à la réception d'une intervention, comme une intervention logicielle, qui peut elle-même être déclenchée par une manipulation logicielle ou une manipulation mécanique du dispositif de communication NFC, par exemple par un utilisateur.

La présente description concerne donc la mise en oeuvre d'un mode de mise en oeuvre d'une communication NFC utilisant une trame d'interrogation du type de la trame 401, mais aussi un mode de réalisation d'un dispositif électronique adapté à utiliser une telle trame d'interrogation. De façon plus précise, la présente description se rapporte à :
- un procédé de communication NFC du type de la communication NFC 200 décrite en relation avec la figure 2 utilisant une trame d'interrogation du type de la trame d'interrogation 401 ;
- un dispositif électronique du type du dispositif électronique 100 décrit en relation avec la figure 1 adapté à générer une trame d'interrogation du type de la trame d'interrogation 401 ;
- un dispositif électronique du type du dispositif électronique 100 décrit en relation avec la figure 1 adapté à recevoir et à interpréter une trame d'interrogation du type de la trame d'interrogation 401 ;
- un système comprenant des dispositifs électroniques adaptés à utiliser une trame d'interrogation du type de la trame d'interrogation 401 pour la mise en oeuvre d'une communication NFC ;
- un programme d'ordinateur comprenant des instructions de code de programme pour l'exécution des étapes d'un procédé de communication NFC lorsque ledit programme est exécuté sur un ordinateur en étant le dispositif adapté à générer une trame d'interrogation du type de la trame d'interrogation 401 ; et
- un programme d'ordinateur comprenant des instructions de code de programme pour l'exécution des étapes d'un procédé de communication NFC lorsque ledit programme est exécuté sur un ordinateur en étant le dispositif adapté à recevoir et interpréter une trame d'interrogation du type de la trame d'interrogation 401.

La figure 5 représente un exemple de mise en oeuvre d'une communication NFC 500 utilisant une trame d'interrogation du type du mode de réalisation de trame d'interrogation 401 décrite en relation avec la figure 4.

La communication NFC 500 est une communication entre un premier dispositif électronique comprenant un module NFC 501 (NFCC) adapté à mettre en la communication 500, et un deuxième dispositif électronique 502 ("Type V" Accessory) adapté à mettre en oeuvre la communication NFC 500.

Selon un mode de réalisation, le dispositif 502 est dans un état 502A (Accessory does not support standard REQ) indiquant qu'il n'est pas adapté à interpréter les données standardisées A, B, F, et V décrites précédemment. Il est donc nécessaire d'utiliser une trame d'interrogation paramétrable pour mettre en oeuvre la communication 500. Plus particulièrement, dans l'exemple de la figure 5, le dispositif 502 est adapté à répondre à une donnée paramétrable similaire à une donnée standardisée V décrite précédemment, mais ne se conformant pas au standard.

A une étape initiale 510 (ALL_REQ), le module NFC 501 commence à envoyer une trame d'interrogation en envoyant une donnée standardisée A décrite précédemment.

A une étape 511 (ALLB_REQ), suivant, par exemple directement, l'étape 510, le module NFC 501 continue à envoyer la trame d'interrogation en envoyant une donnée standardisée B décrite précédemment.

A une étape 512 (SENSF_REQ), suivant, par exemple directement, l'étape 511, le module NFC 501 continue à envoyer la trame d'interrogation en envoyant une donnée standardisée F décrite précédemment.

A une étape 513 (SENSF_REQ), suivant, par exemple directement, l'étape 512, le module NFC 501 continue à envoyer la trame d'interrogation en envoyant une donnée standardisée V décrite précédemment.

A une étape 514 (SENSF_REQ), suivant, par exemple directement, l'étape 513, le module NFC 501 n'a reçu aucune réponse de la part d'un dispositif électronique, et en particulier aucune de la part du dispositif 502. Le module NFC recommence donc à envoyer une deuxième trame d'interrogation en envoyant une donnée standardisée A.

A une étape 515 (ALLB_REQ), suivant, par exemple directement, l'étape 514, le module NFC 501 continue à envoyer la deuxième trame d'interrogation en envoyant une donnée standardisée B décrite précédemment.

A une étape 516 (SENSF_REQ), suivant, par exemple directement, l'étape 515, le module NFC 501 continue à envoyer la deuxième trame d'interrogation en envoyant une donnée standardisée F décrite précédemment.

A une étape 517 (CUSTOM _INVENTORY_REQ), suivant, par exemple directement, l'étape 516, le module NFC 501 continue à envoyer la deuxième trame d'interrogation en envoyant, non une donnée standardisée V, mais une donnée paramétrable. Selon un exemple non représenté en figure 5, l'étape 517 pourrait être suivie par une étape d'envoi d'une donnée standardisée V.

A une étape 518 (INVENTORY_RES), suivant, par exemple directement, l'étape 517, le dispositif 502 a reçu la donnée paramétrable qu'il est capable d'interpréter et répond au module NFC avec une réponse adaptée pour entamer la mise en oeuvre d'une communication NFC.

A une étape 519 (Standard Type V communication), suivant, par exemple directement, l'étape 518, une communication NFC est établie entre le module NFC 501 et le dispositif électronique 502.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Procédé de communication en champ proche (200 ; 500) utilisant une trame d'interrogation (401) comprenant au moins une donnée paramétrable (402).

2. Dispositif de communication en champ proche adapté à utiliser une trame d'interrogation (401) comprenant au moins une donnée paramétrable (402).

3. Procédé selon la revendication 1, ou dispositif selon a revendication 2, dans lequel ladite au moins une première donnée paramétrable (402) comprend une requête.

4. Procédé ou dispositif selon la revendication 3, dans lequel ladite requête comprend un temps de réponse maximale.

5. Procédé selon l'une quelconque des revendications 1, 3 à 4, ou dispositif selon l'une quelconque des revendications 2 à 4, dans lequel ladite au moins une donnée paramétrable (402) a une taille minimale de 8 bits.

6. Procédé selon l'une quelconque des revendications 1, 3 à 5, ou dispositif selon l'une quelconque des revendications 2 à 5, dans lequel ladite au moins une donnée paramétrable (402) a une taille maximale de 128 bits.

7. Procédé selon l'une quelconque des revendications 1, 3 à 6, ou dispositif selon l'une quelconque des revendications 2 à 6, dans lequel ladite au moins une donnée paramétrable (402) est disposée au début de ladite trame d'interrogation (401).

8. Procédé selon l'une quelconque des revendications 1, 3 à 7, ou dispositif selon l'une quelconque des revendications 2 à 7, dans lequel ladite au moins une donnée paramétrable (402) est disposée entre des deuxièmes données standardisées (A, B, F, V) différente de ladite donnée paramétrable (402).

9. Procédé ou dispositif selon la revendication 8, dans lequel lesdites deuxièmes données standardisées (A, B, F, V) comprennent une succession d'une ou de plusieurs des données suivantes, dans l'ordre énoncé :
- une donnée (A) de requête de type A ;
- une donnée (B) de requête de type B ;
- une donnée (F) de requête de type F ; et
- une donnée (V) de requête de type V.

10. Procédé selon l'une quelconque des revendications 1, 3 à 9, ou dispositif selon l'une quelconque des revendications 2 à 9, dans lequel l'utilisation de ladite trame d'interrogation (401) est déclenchée par une intervention logicielle liée à une opération logicielle ou liée à une opération mécanique.

11. Dispositif selon l'une quelconque des revendications 2 à 10, adapté à générer ladite trame d'interrogation (401).

12. Dispositif selon l'une quelconque des revendications 2 à 10, adapté à recevoir ladite trame d'interrogation (401) .

13. Système comprenant un dispositif (100) selon la revendication 11 et un dispositif (100) selon la revendication 12.

14. Programme d'ordinateur comprenant des instructions de code de programme pour l'exécution des étapes du procédé selon l'une quelconque des revendications 1, 3 à 10 lorsque ledit programme est exécuté sur un ordinateur en étant le dispositif selon la revendication 11.

15. Programme d'ordinateur comprenant des instructions de code de programme pour l'exécution des étapes du procédé selon l'une quelconque des revendications 1, 3 à 10 lorsque ledit programme est exécuté sur un ordinateur en étant le dispositif selon la revendication 12.
